# EUROPÄISCHE PATENTSCHRIFT

(11) **EP 3 470 919 B1**
(45) Veröffentlichungstag und Bekanntmachung des Hinweises auf die Patenterteilung: **24.06.2020**
(21) Anmeldenummer: 18198220.8
(22) Anmeldetag: 02.10.2018
(51) Int. Cl.: G03B 21/10, G03B 21/56, G03B 21/62, G03B 21/28

(54) **HAUSHALTSASSISTENT MIT PROJEKTOR**
HOUSEHOLD ASSISTANT WITH PROJECTOR
AIDE MÉNAGÈRE POURVUE DE PROJECTEUR

(30) Priorität: 11.10.2017 DE 102017218162
(43) Veröffentlichungstag der Anmeldung: 17.04.2019
(73) Patentinhaber: BSH Hausgeräte GmbH, 81739 München (DE)
(72) Erfinder: Sagoo, Kiran Pal, 82256 Fürstenfeldbruck (DE); Schaefer, Frank, 82178 Puchheim (DE)

(56) Entgegenhaltungen:
- US-A- 5 416 617
- US-A1- 2007 121 087
- US-A1- 2012 327 315

## Beschreibung

Die Erfindung betrifft einen Haushaltsassistenten. Insbesondere betrifft die Erfindung einen Haushaltsassistenten mit einem Projektor zur Ausgabe einer Darstellung auf einer Oberfläche.

Ein Haushaltsassistent ist dazu eingerichtet, einen Benutzer bei einer Tätigkeit im Haushalt zu unterstützen. Der Haushaltsassistent kann beispielsweise dazu eingerichtet sein, eines oder mehrere Hausgeräte wie einen Herd, eine Dunstabzugshaube oder eine Waschmaschine zu steuern. Ein Benutzer kann bei der Steuerung eines Hausgeräts unterstützt werden, indem ein Benutzerwunsch erfasst und flexibel in ein Steuersignal umgesetzt wird. Dazu kann der Benutzer auf verbale und nonverbale Kommunikationselemente abgetastet werden und in Abhängigkeit dessen können neben verbalen auch nonverbale Kommunikationssignale ausgegeben werden, beispielsweise in Form eines Gesichts mit einer Mimik.

DE 10 2015 210 879 A1 beschreibt eine Vorrichtung mit einer Kamera und einem Projektor, die interaktiv auf einen Nutzer in ihrem Umfeld reagieren kann.

US 2012/0327315 A1 beschreibt einen Haushaltsassistenten welcher Bilder sowohl auf eine interne Fläche als auch auf eine externe Fläche projizieren kann, dabei werden verschiedene optische Pfade benutzt.

US 2007/0121087 A1 beschreibt einen Taschenprojektor welcher ebenfalls sowohl auf eine interne als auch auf eine externe Fläche projizieren kann, dabei wird die interne Fläche in den Strahlengang eingeklappt.

Zur Unterstützung einer Ausgabe an eine Person umfasst ein bekannter Haushaltsassistent ein Display. Zusätzlich kann ein Projektor vorgesehen sein, um eine großformatige optische Ausgabe zu ermöglichen, beispielsweise durch Projektion eines Bildes auf eine Zimmerwand. Die Ausgabevorrichtungen können kostenintensiv sein und eine hohe Verarbeitungsleistung einer Steuereinrichtung erfordern.

Eine der Erfindung zu Grunde liegende Aufgabe besteht darin, einen verbesserten Haushaltsassistenten anzugeben. Die Erfindung löst diese Aufgabe mittels der Gegenstände der unabhängigen Ansprüche. Unteransprüche geben bevorzugte Ausführungsformen wieder.

Ein erfindungsgemäßer Haushaltsassistent umfasst ein Gehäuse; einen Projektor, der im Gehäuse aufgenommen ist; und eine Vorrichtung zur Steuerung eines Strahlengangs des Projektors derart, dass entweder eine erste Oberfläche, die sich am Gehäuse befindet, oder eine zweite Oberfläche, die sich außerhalb des Gehäuses befindet, als Projektionsfläche verwendet werden kann.

Dadurch kann ein Projektor auch die Funktionen eines Displays übernehmen, sodass ein aufwändiges und empfindliches Element eingespart werden kann. Mit dem Display kann auch eine dedizierte Ansteuereinrichtung ("display controller") entfallen. Ein Energieverbrauch kann reduziert sein. Der Haushaltsassistent kann einfacher, robuster oder kostengünstiger aufgebaut sein. Außerdem kann das Gehäuse kompakter gestaltet werden, sodass der Haushaltsassistent in einem Haushalt leichter an unterschiedlichen Stellen eingesetzt werden kann.

In einer ersten Variante der Erfindung ist am Gehäuse des Haushaltsassistenten ein Element zum Durchtritt von Licht vom Projektor zur zweiten Oberfläche vorgesehen, wobei eine Transparenz des Elements steuerbar ist. Insbesondere kann das Element angesteuert werden, milchig zu sein, um als Rückprojektionsfläche zu wirken, oder klar zu sein, um den Durchtritt eines projizierten Bilds zur zweiten Oberfläche zu erlauben. Dadurch kann die Projektionsfläche ausgewählt werden, ohne ein mechanisch bewegtes Element zu erfordern. Der Haushaltsassistent kann so verbessert robust sein.

Ob das Element transparent oder opak ist, kann insbesondere elektrisch gesteuert werden. Bevorzugt ist das Element bei Verwendung der ersten Projektionsfläche möglichst vollständig transparent wie beispielsweise Fensterglas. Wird das Element angesteuert, opak zu sein, ist er weiter bevorzugt nicht dunkel, sondern reflektierend, insbesondere milchig oder diffus reflektierend. Dies kann durch eine Beschichtung mit steuerbarer Transparenz auf einem durchsichtigen Trägermaterial wie Glas oder Kunststoff realisiert werden. Die Beschichtung ist bevorzugt möglichst dünn, sodass ein Bild, das von der Hinterseite auf das Element projiziert wird, auf der Vorderseite scharf abgebildet ist. Die Kombination aus einem transparenten Trägermaterial und einer Beschichtung mit veränderlichen optischen Eigenschaften kann auch Intelligentes Glas ("Smart Glass") genannt werden.

Für die steuerbare Beschichtung können unterschiedliche Techniken verwendet werden. In einer ersten Ausführungsform ist am Element ein elektrochromes Material angebracht. Ein solches Material kann mittels einer geringen Gleichspannung (ca. 1-3 V) in seiner Opazität gesteuert werden. Die Beschichtung kann beispielsweise ein Übergangsmetalloxid wie Wolframoxid oder ein leitfähiges Polymer wie Polyanilin umfassen.

In einer zweiten Ausführungsform ist am Element ein Flüssigkristall angebracht. Das Flüssigkristall kann beispielsweise nach Art einer Flüssigkristallanzeige zwischen zwei Glasscheiben aufgenommen sein. Alternativ kann das Flüssigkristall auch in ein Polymereingemischt sein ("polymer dispersed liquid crystal device"). Ferner können in einer Flüssigkeit suspendierte Partikel ("suspended particle device") zur Steuerung der optischen Eigenschaften eingesetzt werden. In weiteren Ausführungsformen können am Element auch Mikroblenden ("micro blind device") oder ein Nanokristall ("nano crystal device") angebracht sein.

Der Projektor ist dazu eingerichtet, ein darzustellendes Bild in Abhängigkeit der verwendeten Projektionsfläche seitenverkehrt auszugeben. Bevorzugt wird das projizierte Bild bei Verwendung der ersten Oberfläche als Projektionsfläche seitenverkehrt und bei Verwendung der zweiten Oberfläche nicht. Eine umgekehrte Zuordnung ist ebenfalls möglich.

Außerdem kann ein abbildendes System vorgesehen sein, das dazu eingerichtet ist, ein Projektionsverhältnis des Projektors in Abhängigkeit eines Abstands zwischen dem Projektor und der verwendeten Projektionsfläche zu steuern. Dabei gibt das Projektionsverhältnis eine Breite des projizierten Bildes auf der Projektionsfläche im Verhältnis zum Abstand des Projektors zur Projektionsfläche an.

Eine Bildweite, die zwischen dem Projektor und der Projektionsfläche liegt, kann für die erste Oberfläche deutlich kleiner als für die zweite Oberfläche sein. Eine gewünschte Bildgröße auf der ersten Oberfläche kann auch kleiner als eine gewünschte Bildgröße auf der zweiten Oberfläche sein. In einer Ausführungsform umfasst der Projektor eine Linsenanordnung, die eine stufenlose Verstellung des Projektionsverhältnisses erlaubt. In einer zweiten Ausführungsform können eines oder mehrere Linsen- oder Reflektorelemente vorgesehen sein, die in den Strahlengang zwischen dem Projektor und der Projektionsfläche verbracht oder von dort entfernt werden können, um das Projektionsverhältnis zu beeinflussen. Ein solches Linsenelement kann eine Weitwinkel-Linse umfassen.

Die Erfindung wird nun unter Bezug auf die beiliegenden Figuren genauer beschrieben, in denen:
- Fig. 1: eine schematische Darstellung eines beispielhaften Haushaltsassistenten, mit einem Benutzer und einem Hausgerät;
- Fig. 2: einen exemplarischen Haushaltsassistenten mit einem Projektor in einer ersten Betriebsart;
- Fig. 3: den Haushaltsassistenten von Figur 2 in einer zweiten Betriebsart; und
- Fig. 4: einen weiteren exemplarischen Haushaltsassistenten
darstellt.

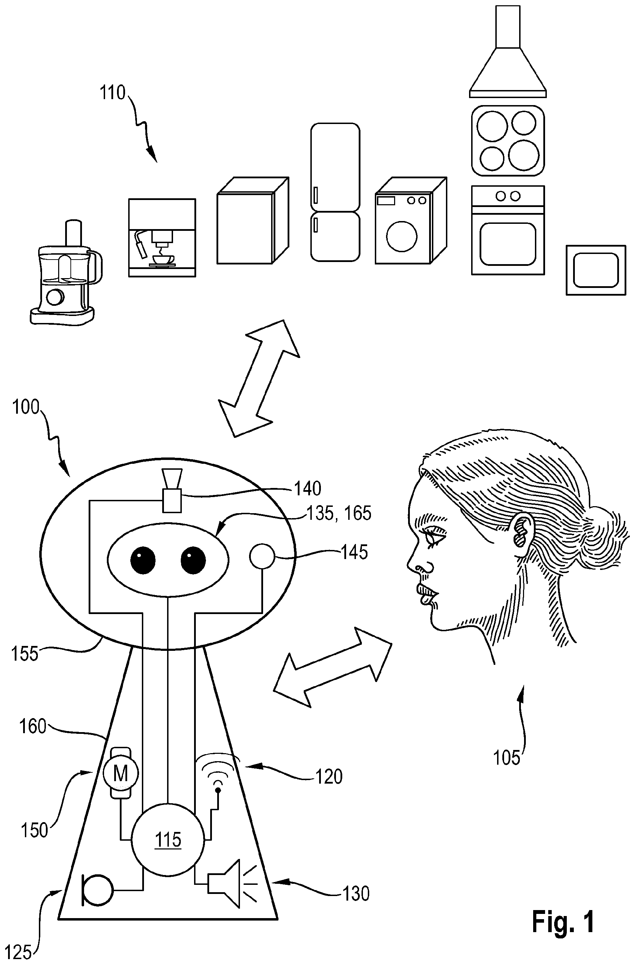

Figur 1 zeigt einen beispielhaften Haushaltsassistenten 100, der insbesondere zur Unterstützung einer Kommunikation zwischen einem Benutzer 105 und einem Hausgerät 110 eingerichtet sein kann. Es können auch mehrere Hausgeräte 110 nacheinander, gleichzeitig oder miteinander vernetzt durch den Haushaltsassistenten 100 gesteuert werden. Exemplarisch sind als Hausgeräte 110 eine Schneidemaschine, eine Kaffeemaschine, ein Geschirrspüler, ein Kühl- und Gefrierschrank, eine Waschmaschine, ein Ofen, ein Herd, eine Dunstabzugshaube und ein Mikrowellenofen dargestellt, andere Hausgeräte 110 können jedoch auch gesteuert werden. Die Hausgeräte 110 befinden sich bevorzugt alle in demselben Haushalt, insbesondere im gleichen Raum des Haushalts, wobei der Raum eine Küche sein kann. Als Küche kann ein Raum angesehen werden, in dem wenigstens ein Herd oder Ofen steht, wobei dieser nicht notwendigerweise mittels des Haushaltsassistenten 100 steuerbar sein muss.

Der Haushaltsassistent 100 ist bevorzugt dazu eingerichtet, eine Eingabe des Benutzers 105 abzutasten, die Eingabe in ein Signal umzuwandeln und das Signal dem Hausgerät 110 bereitzustellen. Jedes steuerbare Hausgerät 110 verfügt daher bevorzugt über eine Schnittstelle, die bevorzugt drahtlos ausgeführt ist. Außerdem kann der Haushaltsassistent 100 dazu eingerichtet sein, ein Signal des Hausgeräts 110 abzutasten, das Signal in eine Ausgabe umzuwandeln und die Ausgabe dem Benutzer 105 bereitzustellen.

Der Haushaltsassistent 100 umfasst in der dargestellten, exemplarischen Ausführungsform eine Verarbeitungseinrichtung 115, eine bevorzugt drahtlose Schnittstelle 120, sowie bevorzugt einen oder mehrere Sensoren oder Aktoren. Beispielsweise können eine akustische Eingabevorrichtung 125, eine akustische Ausgabevorrichtung 130, eine Anzeigevorrichtung 135, ein Projektor 140 oder eine Kamera 145 vorgesehen sein. Die akustische Eingabevorrichtung 125 kann mehrfach ausgeführt sein, um eine Ortung einer Geräuschquelle nach dem Stereo-Prinzip zu erlauben. Beispielsweise können mehrere akustische Eingabevorrichtungen 125 auf einem Umkreis angeordnet sein. Bevorzugt wird eine Ortungsgenauigkeit von ca. ±15° bei einer Entfernung der Geräuschquelle von ca. 4 m erreicht. In Verbindung mit der Kamera 145 kann die Verarbeitungsvorrichtung 115 dazu eingerichtet sein, einen Gegenstand, eine Person, einen Gesichtsausdruck oder eine Körperhaltung einer Person zu erkennen. Es können auch mehrere akustische Ausgabevorrichtungen 130 vorgesehen sein, um eine gerichtete Ausgabe von akustischen Informationen zu erlauben. Daneben sind noch andere oder weitere Sensoren oder Aktoren möglich.

In einer weiteren Ausführungsform kann ein mechanischer Aktor 150 vorgesehen sein, um einen Teil des Haushaltsassistenten 100 zu bewegen. In der dargestellten Ausführungsform kann beispielsweise ein rundlich dargestellter Kopfabschnitt 155 gegenüber einem Basisabschnitt 160 beispielsweise um eine horizontale oder vertikale Achse verschwenkt, gedreht oder gegenüber der Achse verschoben werden. Aktoren oder Sensoren, die speziell auf den Benutzer 105 ausgerichtet werden sollen, sind hierbei bevorzugt am Kopfabschnitt 155 angebracht. Ferner kann die Position des Kopfabschnitts 155 zum Ausdrücken von Emotionen verwendet werden. Die Verarbeitungseinrichtung 115 ist bevorzugt dazu eingerichtet, eine natürlichsprachige Eingabe des Benutzers 105 mittels der Eingabevorrichtung 125 abzutasten und zu analysieren. Die Eingabevorrichtung 125 kann mehrfach vorgesehen sein, sodass nach dem Stereoprinzip eine zumindest grobe Ortung des Benutzers 105 relativ zum Haushaltsassistenten 100 möglich sein kann. Die Ausgabevorrichtung 130 kann ferner dazu eingerichtet sein, ein Signal in eine gesprochene Nachricht umzuwandeln ("Text to Speech", Text in Sprache) und mittels der akustischen Ausgabevorrichtung 130 auszugeben. Der Projektor 140 kann auf eine Arbeitsoberfläche oder eine Wand gerichtet werden. Mittels des Projektors 140 und/oder der Anzeigevorrichtung 135 können graphische oder textuelle Ausgaben erfolgen. Insbesondere können auf diesem Weg ein Auge oder ein Augenpaar dargestellt werden, bevorzugt in Abhängigkeit einer zuvor bestimmten empathischen Emotion. In einer weiteren Ausführungsform ist auch eine haptische Eingabevorrichtung 165 vorgesehen, die insbesondere mit der Anzeigevorrichtung 135 integriert als Touchscreen ausgeführt sein kann. In einer Ausführungsform ist die haptische Eingabevorrichtung 165 dazu eingerichtet, eine manuelle Navigation durch eine klassische Benutzerschnittstelle zu erlauben, um den Haushaltsassistenten 100 zu steuern. In einer weiteren Ausführungsform ist die haptische Eingabevorrichtung 165 dazu eingerichtet, eine taktile Äußerung wie eine Berührung, ein Streicheln oder Streichen, ein Reiben, ein Klopfen, ein Ziehen, ein Kratzen oder ein Schlagen zu erfassen.

Der Haushaltsassistent 100 ist bevorzugt dazu eingerichtet, sich zumindest ansatzweise wie ein Mitbewohner oder ein Familienmitglied einer Familie darzustellen, die in dem Haushalt lebt. Die Interaktion mit dem Haushaltsassistenten 100 ist bevorzugt leicht zu erlernen oder durchzuführen, macht Freude und kann in die täglichen Abläufe der Benutzer 105 im Haushalt auf natürliche Weise eingebunden werden. Die Erfüllung dieser Ziele werden insbesondere durch die Spracheingabe und Sprachausgabe oder die Darstellbarkeit textueller oder graphischer Informationen mittels der Anzeigeeinrichtung 135 oder des Projektors 140 unterstützt. Außerdem wird angestrebt, dass eine soziale Interaktion auf der Basis einer Emotion des Benutzers 105 und einer daraus abgeleiteten empathischen Emotion des Haushaltsassistenten 100 zur Unterstützung der Interaktion eingesetzt wird. Das Ausdrücken der empathischen Emotion kann unterschiedliche Aspekte umfassen, beispielsweise optisch, akustisch oder durch eine Bewegung. Eines oder mehrere Hausgeräte 110 können durch den Haushaltsassistenten teilweise automatisch gesteuert werden. Beispielsweise kann eine situationsabhängige Steuerung erfolgen, sodass ein Betriebszustand eines Hausgeräts 110 Einfluss auf den Betriebszustand eines anderen Hausgeräts 110 haben kann. Der Haushaltsassistent 100 kann als Konzentrator ("Hub") für Geräte dienen, die nach dem Gedanken des Internet der Dinge ("Internet of Things", loT) netzwerkfähig sind. Dazu können auch andere Geräte als die Hausgeräte 110 mit dem Haushaltsassistenten 100 verbunden werden.

Der Haushaltsassistent 100 kann auch spezifische Dienste anbieten, die insbesondere in einer Küche vom Benutzer 105 als hilfreich empfunden werden können. Beispielsweise kann eine Schritt-für-Schritt-Unterstützung beim Kochen nach Rezept erfolgen. Der Haushaltsassistent 100 kann zum Auffinden eines gewünschten Rezepts verwendet werden und eine optische Anleitung während des Kochprozesses anbieten. Mehrere Benutzer 105 an unterschiedlichen Orten können miteinander kochen, indem sie über Videofunktion dem Haushaltsassistenen 100 miteinander verbunden werden. In ähnlicher Weise kann der Benutzer 105 an einem Kochkurs teilnehmen, um seine Kochkünste zu verbessern. Die eigene Küche muss er dazu nicht verlassen. Der Haushaltsassistent 100 kann auch allgemeine Wissens- oder Informationsfragen beantworten, beispielsweise nach einem aktuellen Wetter oder einer Nachrichtenlage. Der Haushaltsassistent 100 kann zum Abspielen eines Films oder von Musik genutzt werden. Sollte eines der Hausgeräte110 ein Problem zeigen, so kann mittels des Haushaltsassistenten 100 ein Kundendienst kontaktiert werden.

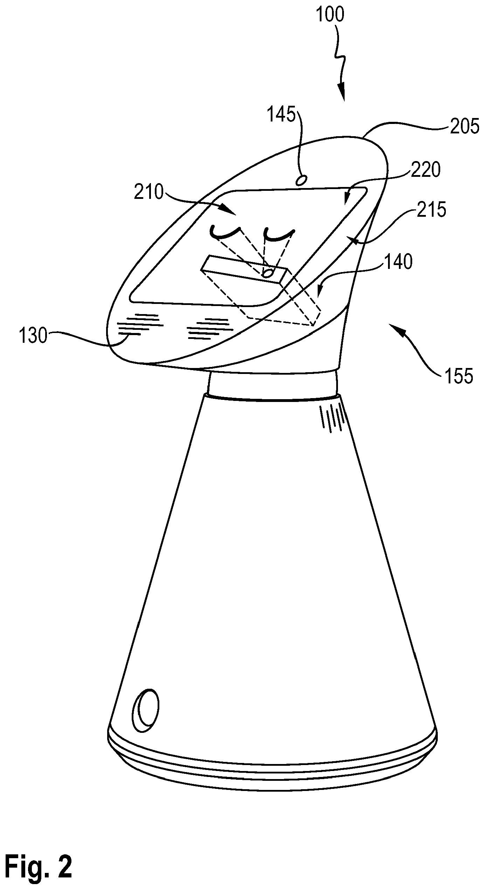

Figur 2 zeigt einen exemplarischen Haushaltsassistenten 100 mit einem Projektor 140. Der Haushaltsassistent 100 kann insbesondere eine Variante oder Erweiterung des in Figur 1 dargestellten Haushaltsassistenten 100 umfassen. Der Projektor 140 ist innerhalb eines Gehäuses 205 des Haushaltsassistenten 100 angeordnet. In der vorliegenden Ausführungsform umfasst das Gehäuse 205 lediglich einen Abschnitt des Haushaltsassistenten 100, insbesondere den Kopfabschnitt 155. In anderen Ausführungsformen können auch andere oder größere Abschnitte bis hin zum vollständigen Haushaltsassistenten 100 vom Gehäuse 205 umschlossen sein.

Ein Strahlengang des Projektors 140 ist auf einen Abschnitt des Gehäuses 205 gerichtet, an welchem ein Element 210 eingelassen ist, dessen optische Eigenschaften steuerbar sind. Dieses Element 210 kann insbesondere als Intelligentes Glas ausgeführt sein. In der dargestellten Ausführungsform ist das Element 210 opak, sodass ein vom Projektor 140 ausgestrahltes Bild nach Art einer Rückprojektion auf dem Element dargestellt werden kann. In Figur 2 sind als beispielhafte projizierte Darstellung Augen des Haushaltsassistenten 100 auf der Außenseite des Elements sichtbar (vgl. hierzu auch die Darstellung von Figur 1). Das Element 210 ist bevorzugt in das Gehäuse eingelassen, sodass ein Übergang zwischen der Außenseite des Gehäuses 205 und der Außenseite des Elements 210 möglichst gleichmäßig verläuft.

Das Element 210 kann ein Trägermaterial 215 und eine Beschichtung 220 umfassen, wobei das Trägermaterial 215 eine mechanische Stabilität sicherstellen kann und bevorzugt unveränderlich transparent ist. Die Beschichtung 220 kann in ihren optischen Eigenschaften steuerbar sein und an einer Innenseite, einer Außenseite oder eingebettet in das Trägermaterial 215 angebracht sein. Die Beschichtung 215 kann bevorzugt in einen ersten Zustand gesteuert werden, in welchem sie sich als Projektionsfläche eignet, insbesondere für die dargestellte Rückprojektion, oder in einen zweiten Zustand, in welchem sie transparent ist, wie in Figur 2 zu sehen ist. Im ersten Zustand ist die Beschichtung 220 bevorzugt milchig, trüb oder diffus. Die Opazität kann stark reduziert sein, sodass das Element 210 an unbeleuchteten Stellen dunkel erscheinen kann. Die Opazität der Beschichtung 215 ist bevorzugt elektrisch steuerbar und die Steuerung kann mittels der Verarbeitungseinrichtung 115 oder einer anderen Einrichtung erfolgen. Die Beschichtung 115 kann in unterschiedlichen Ausführungsformen insbesondere eines von einem elektrochromen Material, einem Flüssigkristall, Mikroblenden oder einem Nanokristall umfassen.

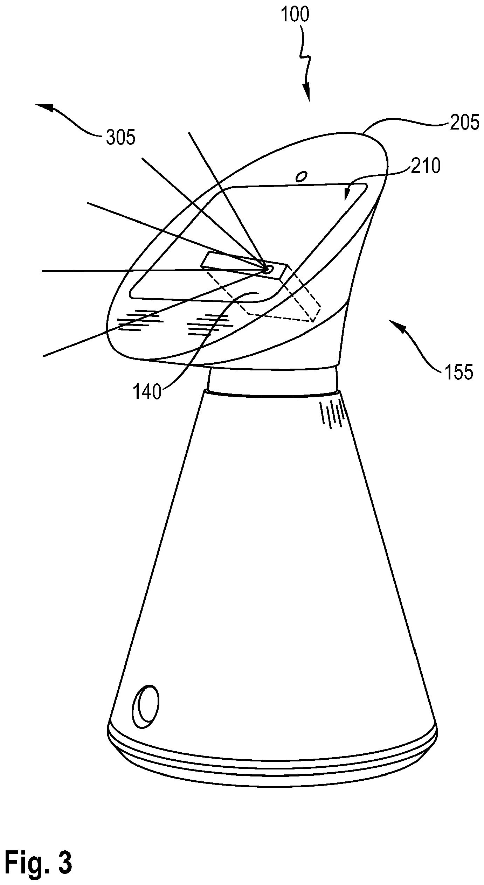

Figur 3 zeigt den Haushaltsassistenten 100 von Figur 2, wobei das Element 210 in einen zweiten Zustand gesteuert ist, in welchem das Element 210 möglichst vollständig transparent ist. Das Element 210 kann als Durchtrittsfläche durch das Gehäuses 205 wirken und der Projektor 140 kann auf eine außerhalb des Gehäuses 205 liegende Oberfläche 305 gerichtet sein, die als Projektionsfläche dienen kann. Die Oberfläche 305 kann beispielsweise eine Wand oder ein Boden eines Zimmers oder auch eine Oberfläche eines Möbels oder Geräts wie eines der Haushaltsgeräts 110 umfassen.

In der Ausführungsform des Haushaltsassistenten 100 der Figuren 2 und 3 liegen das Element 210 und die Oberfläche 305 vom Projektor 140 aus in der gleichen Richtung, werden aber von unterschiedlichen Seiten betrachtet. Ein durch den Projektor 140 ausgestrahltes Bild kann in einem der Zustände gegenüber dem anderen Zustand seitenverkehrt (horizontal gespiegelt) werden, um für den Benutzer 105 einander entsprechende Darstellungen bereitzustellen. Ferner kann der Projektor 140 dazu eingerichtet sein, ein Projektionsverhältnis an den verwendeten Zustand anzupassen, um die Größe der projizierten Darstellung auf dem Element 210 oder auf der Oberfläche 305 passend zu gestalten. Dazu kann der Projektor 140 insbesondere über ein entsprechendes Linsensystem verfügen, das eine insbesondere stufenlose Verstellung des Projektionsverhältnisses erlauben kann. Alternativ kann auch ein außerhalb des Projektors 140 angeordnetes optisches Element verwendet werden, beispielsweise ein verstellbares Linsensystem oder eine oder mehrere Linsen, die mechanisch in den Strahlengang verbracht oder aus ihm entfernt werden können.

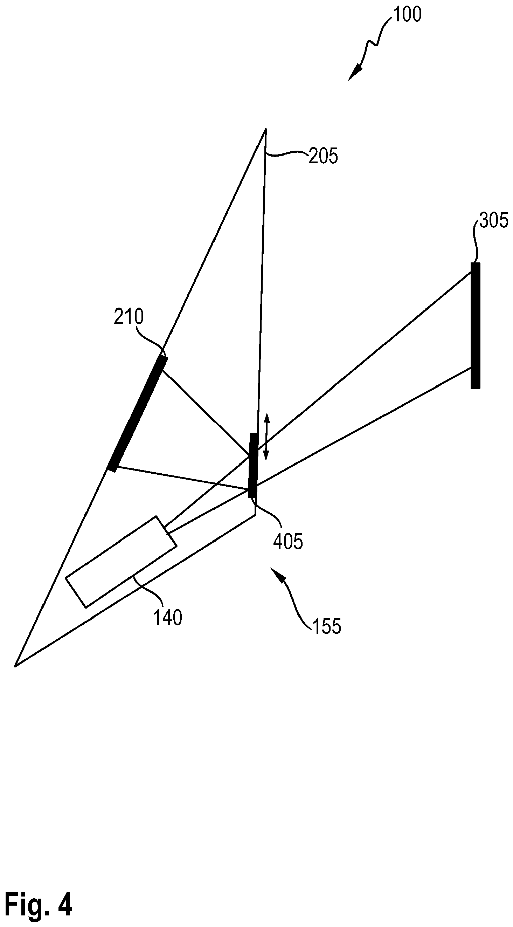

Figur 4 zeigt einen weiteren exemplarischen Haushaltsassistenten 100, der ebenfalls auf dem von Figur 1 basieren kann. Elemente oder Vorzüge des dargestellten Haushaltsassistenten 100 können mit solchen des Haushaltsassistenten 100 der Figuren 2 und 3 kombinierbar sein. Hier ist ein reflektierendes Element 405 vorgesehen, das hier im Strahlengang zwischen dem Projektor 140 und dem Element 210 liegt. Das reflektierende Element 405 kann aus dem Strahlengang entfernt werden, sodass der Projektor 140 nicht auf das Element 210, sondern auf die Oberfläche 305 projiziert. Dazu kann das reflektierende Element insbesondere verschoben der um eine Drehachse geklappt werden. In einer anderen Ausführungsform sind die Projektionsflächen 305 und 210 in ihren Anordnungen bezüglich des Projektors 140 vertauscht, sodass das reflektierende Element 405 im Strahlengang zur Oberfläche 305 liegen kann, nicht aber im Strahlengang zum Element 210.

Alternativ kann auch an Stelle des reflektierenden Elements 405 der Projektor 140 beweglich sein, um alternativ auf das reflektierende Element 405 oder daran vorbei zu projizieren.

Vorteilhaft an der in Figur 4 dargestellten Ausführungsform ist, dass sich der Haushaltsassistent 100 in beiden Zuständen oder Betriebsarten zwischen dem Benutzer 105 und der Oberfläche 305 befinden kann, sodass es nicht erforderlich sein kann, den Haushaltsassistenten 100 zu bewegen, wenn von der einen in die andere Betriebsart gewechselt werden soll. Auch kann in dieser Ausführungsform darauf verzichtet werden, in einer der Betriebsarten eine seitenverkehrte Darstellung durch den Projektor 140 oder das Einfügen eines reflektierenden Elements oder eine andere Betriebsart des Projektors 140 zu aktivieren.

### Bezugszeichen

- 100: Haushaltsassistent
- 105: Benutzer
- 110: Hausgerät
- 115: Verarbeitungseinrichtung
- 120: Schnittstelle
- 125: akustische Eingabevorrichtung
- 130: akustische Ausgabevorrichtung
- 135: Anzeigevorrichtung
- 140: Projektor
- 145: Kamera
- 150: Aktor
- 155: Kopfabschnitt
- 160: Basisabschnitt
- 165: haptische Eingabevorrichtung

- 205: Gehäuse
- 210: Element
- 215: Trägermaterial
- 220: Beschichtung

- 305: Oberfläche

- 405: reflektierendes Element

## Patentansprüche

1. Haushaltsassistent (100) zur Unterstützung eines Benutzers bei einer Tätigkeit im Haushalt, umfassend:
- ein Gehäuse (205);
- einen Projektor (140), der im Gehäuse (205) aufgenommen ist; und
- eine Vorrichtung (210, 405) zur Steuerung eines Strahlengangs des Projektors (140) derart, dass entweder
- eine erste Oberfläche (210), die sich am Gehäuse (205) befindet, oder
- eine zweite Oberfläche (305), die sich außerhalb des Gehäuses (205) befindet,
- als Projektionsfläche verwendet werden kann,
**dadurch gekennzeichnet, dass**
- die erste Oberfläche als Element (210) zum Durchtritt von Licht vom Projektor (140) zur zweiten Oberfläche (305) vorgesehen ist, dessen Transparenz steuerbar ist, und
- der Projektor (140) dazu eingerichtet ist, ein darzustellendes Bild in Abhängigkeit der verwendeten Projektionsfläche (210, 305) seitenverkehrt auszugeben.

2. Haushaltsassistent (100) nach Anspruch 1, wobei das Element (210) angesteuert werden kann, milchig zu sein, um als Rückprojektionsfläche zu wirken, oder klar zu sein, um den Durchtritt eines projizierten Bilds zur zweiten Oberfläche zu erlauben.

3. Haushaltsassistent (100) nach einem der Ansprüche 1 oder 2, wobei am Element (210) ein elektrochromes Material angebracht ist.

4. Haushaltsassistent (100) nach einem der Ansprüche 1 bis 3, wobei am Element (210) ein Flüssigkristall angebracht ist.

5. Haushaltsassistent (100) nach einem der vorhergehenden Ansprüche, wobei die erste Oberfläche (210) ein geschwärztes Glas umfasst.

6. Haushaltsassistent (100) nach einem der vorangehenden Ansprüche, ferner umfassend ein abbildendes System (140), das dazu eingerichtet ist, ein Projektionsverhältnis des Projektors (140) in Abhängigkeit eines Abstands zwischen dem Projektor (140) und der verwendeten Projektionsfläche (210, 305) zu steuern.

## Claims

1. Household assistant (100) for supporting a user in an activity in the household, comprising:
- a housing (205);
- a projector (140), which is accommodated in the housing (205); and
- an apparatus (210, 405) for controlling a beam path of the projector (140) such that either
- a first surface (210), which is located on the housing (205), or
- a second surface (305), which is located outside the housing (205),
- can be used as a projection area,
**characterised in that**
- the first surface is provided as an element (210) for the passage of light from the projector (140) to the second surface (305), the transparency of which can be controlled, and
- the projector (140) is configured to output an image to be shown in an inverted manner, as a function of the projection area (210, 305) used.

2. Household assistant (100) according to claim 1, wherein the element (210) can be actuated to be opaque, in order to act as a back-projection area, or to be transparent, in order to allow the passage of a projected image to the second surface.

3. Household assistant (100) according to one of claims 1 or 2, wherein an electrochromic material is attached to the element (210).

4. Household assistant (100) according to one of claims 1 to 3, wherein a liquid crystal is attached to the element (210).

5. Household assistant (100) according to one of the preceding claims, wherein the first surface (210) comprises a blackened glass.

6. Household assistant (100) according to one of the preceding claims, further comprising an imaging system (140), which is configured to control a projection relationship of the projector (140) as a function of a distance between the projector (140) and the projection area (210, 305) used.

## Revendications

1. Assistant ménager (100) pour l'aide d'un utilisateur lors d'une activité ménagère, comprenant :
- un carter (205) ;
- un projecteur (140) logé dans le carter (205) ; et
- un dispositif (210, 405) pour la commande d'un trajet de faisceau du projecteur (140) de telle sorte que soit
- une première surface (210) se trouvant sur le carter (205), soit
- une deuxième surface (210) se trouvant en dehors du carter (205),
- peut s'utiliser comme surface de projection,
**caractérisé en ce que**
- la première surface est prévue sous la forme d'un élément (210) pour le passage de lumière du projecteur (140) vers la deuxième surface (305), dont la transparence est commandable, et
- le projecteur (140) est aménagé afin d'émettre une image inversée latéralement à présenter en fonction de la surface de projection (210, 305) utilisée.

2. Assistant ménager (100) selon la revendication 1, dans lequel l'élément (210) peut être commandé afin d'être laiteux pour agir comme surface de rétroprojection, ou afin d'être claire pour permettre le passage d'une image projetée vers la deuxième surface.

3. Assistant ménager (100) selon l'une des revendications 1 ou 2, dans lequel un matériau électrochrome est apposé sur l'élément (210).

4. Assistant ménager (100) selon l'une des revendications 1 à 3, dans lequel un cristal liquide est apposé sur l'élément (210).

5. Assistant ménager (100) selon l'une des revendications précédentes, dans lequel la première surface (210) comprend un verre noirci.

6. Assistant ménager (100) selon l'une des revendications précédentes, comprenant en outre un système de reproduction (140) aménagé afin de commander un rapport de projection du projecteur (140) en fonction d'un écartement entre le projecteur (140) et la surface de projection (210, 305) utilisée.
